# EUROPEAN PATENT APPLICATION

(11) **EP 0 745 788 A1**
(43) Date of publication of application: **04.12.1996**
(21) Application number: 96108540.4
(22) Date of filing: 29.05.1996
(51) Int. Cl.: F16H 61/02, F16H 59/66

(54) **Control system for automatic transmission with location detecting means**

(30) Priority: 30.05.1995 JP 157219/95
(71) Applicant: AISIN AW CO., LTD., Anjo-shi Aichi-ken 444-11 (JP)
(72) Inventor: Moroto, Shuzo, Anjo-shi, Aichi-ken, 444-11 (JP); Miki, Nobuaki, Anjo-shi, Aichi-ken, 444-11 (JP); Kusafuka, Numeo, Anjo-shi, Aichi-ken, 444-11 (JP); Murase, Yoshitaka, Anjo-shi, Aichi-ken, 444-11 (JP); Yokoyama, Shoji, Tokyo-to, 101 (JP)
(74) Representative: VOSSIUS & PARTNER

(57) **Abstract**

A control system for an automatic transmission, comprising: location detecting means (1) for detecting the present location of a vehicle by a navigation system (11); vehicle status detecting means (2,13,14) for detecting the status of the vehicle; shift map determining means (3) for determining a shift map by the operation of a driver; storage means (4,12) for storing the detected location, the shift map determined at the location by the shift map determining means, and the vehicle status detected at the location by the vehicle status detecting means; and shift map changing means (5) for changing the shift map to the stored one, when the detected location and the vehicle status detected at the location are identical to the stored ones, whereby the transmission mechanism (6) of the automatic transmission is controlled by the changed shift map.

## Description

The present invention relates to an automatic transmission and, more particularly, to a control system for an automatic transmission, for achieving the running characteristics, as demanded by the driver of a vehicle, without any vehicular operation of the driver by changing a shift map to that stored in storage means, when the location detected by location detecting means and the vehicular status detected at the location by vehicular status detecting means are identical those stored by the storage means.

Each time a traffic-jammed area and a smooth run allowing area, even if decided in the frequently used route such as the commuter route, is entered, the driver operates a change switch in a control system for an automatic transmission of the prior art to change the shift map.

The aforementioned control system for an automatic transmission of the prior art is troubled by having to perform the same operation upon the vehicle at the same point even on the route such as the commuter route to be frequently used.

Specifically, if the road runs straight and has no vehicle ahead and if the driver demands a high acceleration, the driver is required to operate a switch for a power mode so as to select an acceleration stressed shift map. For the route on which the smooth running area and the jammed area are repeated, moreover, there arises a problem that the troublesome vehicle operations are required of the driver.

We therefore noticed the technical concept of the present invention that the shift map is changed to that stored in storage means when the location detected by location detecting means and the vehicle status detected at the location by the vehicle status detecting means are identical to those stored by the storage means. Ever since, we have repeated investigations and developments to reach the present invention having an object to achieve the running characteristics, as demanded by the driver, automatically without any vehicular operation of the driver.

According to a first aspect of the present invention, there is provided a control system for an automatic transmission comprising: location detecting means for detecting the present location of a vehicle; shift map determining means for determining a shift map by the operation of a driver; vehicle status detecting means for detecting the status of the vehicle; storage means for storing the location detected by the location detecting means, the shift map determined at the location by the shift map determining means, and the vehicle status detected at the location by the vehicle status detecting means; and shift map changing means for changing the shift map to that stored in the storage means, when the location detected by the location detecting means and the vehicle status detected at the location by the vehicle status detecting means are identical to the location and the vehicle status which are stored by the storage means.

According to a second aspect of the present invention, there is further comprised a navigation system including the location detecting means for guiding the route from the present location of the vehicle to a destination.

According a third aspect of the present invention, the storage means stores the followed route, as searched by the navigation system, from a starting point to the destination.

According to a fourth aspect of the present invention, it is decided whether or not the searched route to the destination is identical to that which has been learned and stored together with the shift map and the vehicle status in the storage means.

According to a fifth aspect of the present invention, the shift map changing means changes the shift map to that on the route stored in the storage means, when the vehicle statuses at a plurality of consecutive points on the searched route are identical.

According to a sixth aspect of the present invention, further comprised is time environment detecting means for detecting a time environment including the month, the date, the day and the time and outputting it to the storage means, and the shift map changing means changes the shift map to that stored in the storage means, when the location detected by the location detecting means and the time environment detected by the time environment means are within the allowable error range of the time environment stored at the location in the storage means.

In the control system for an automatic transmission thus constructed according to the first aspect of invention: the location detecting means detects the present location of the vehicle; the vehicle status detecting means detects the vehicle status; the shift map determining means determines the shift map by the operation of the driver; the storage means stores the location detected by the location detecting means, the shift map determined at the location by the shift map determining means, and the vehicle status detected by the vehicle status detecting means; and the shift map change means changes the shift map to that stored in the storage means, when the location detected by the location detecting means and the vehicle status detected at the location by the vehicle status detecting means are identical to those stored by the storage means.

In the control system for an automatic transmission thus constructed according to the second aspect of invention: the location detecting means is included in the navigation system for guiding the route from the present location of the vehicle to the destination and detects the present location of the vehicle; the vehicle status detecting means detects the vehicle status; the shift map determining means determines the shift map by the operation of the driver; the storage means stores the location detected by the location detecting means, the shift map determined at the location by the shift map determining means, and the vehicle status detected by the vehicle status detecting means; and the shift map change means changes the shift map to that stored in the storage means, when the location detected by the location detecting means and the vehicle status detected at the location by the vehicle status detecting means are identical to those stored by the storage means.

In the control system for an automatic transmission thus constructed according to the third aspect of invention: the location detecting means is included in the navigation system for guiding the route from the present location of the vehicle to the destination and detects the present location of the vehicle; the vehicle status detecting means detects the vehicle status; the shift map determining means determines the shift map by the operation of the driver; the storage means stores the route followed from a starting point to a destination, the location detected on the route by the location detecting means, the shift map determined at the location by the shift map determining means, and the vehicle status detected by the vehicle status detecting means; and the shift map change means changes the shift map to that stored in the storage means, when the route searched by the navigation system and the vehicle status detected by the vehicle status detecting means are identical to those stored by the storage means.

In the control system for an automatic transmission thus constructed according to the fourth aspect of invention: the location detecting means is included in the navigation system for guiding the route from the present location of the vehicle to the destination and detects the present location of the vehicle; the vehicle status detecting means detects the vehicle status; the shift map determining means determines the shift map by the operation of the driver; the storage means stores the location detected by the location detecting means, the shift map determined at the location by the shift map determining means, and the vehicle status detected by the vehicle status detecting means; and the shift map change means decides whether or not the route to the destination, as searched by the navigation system, is identical to the learned route stored together with the shift map and the vehicle status in the storage means, and changes the shift map to that stored in the storage means, when the location detected by the location detecting means and the vehicle status detected at the location by the vehicle status detecting means are identical to those stored by the storage means.

In the control system for an automatic transmission thus constructed according to the fifth aspect of invention, the shift map changing means changes the shift map to that on the route stored in the storage means, when the vehicle statuses at a plurality of consecutive points on the searched route are identical.

In the control system for an automatic transmission thus constructed according to the sixth aspect of invention, the shift map changing means changes the shift map to that stored in the storage means, when the location detected by the location detecting means and the time environment including the month, the date, the day and the time detected by the time environment means are within the allowable error range of the time environment stored at the location in the storage means.

The present invention will be described in the following in connection with its embodiments with reference to the accompanying drawings,
Fig. 1 is a block diagram showing a system of a first embodiment of the present invention;
Fig. 2 is a block diagram showing a hardware construction of the present first embodiment;
Fig. 3 is a chart showing an operation flow of the present first embodiment;
Fig. 4 is a diagram illustrating the running course and the running pattern in the present first embodiment;
Fig. 5 is a diagram plotting the shift made in the economy mode in the present first embodiment;
Fig. 6 is a diagram plotting the shift made in the power mode in the present first embodiment;
Fig. 7 is a chart showing an operation flow of a second embodiment of the present invention; and
Fig. 8 is a chart showing an operation flow of the learning method of the present second embodiment.

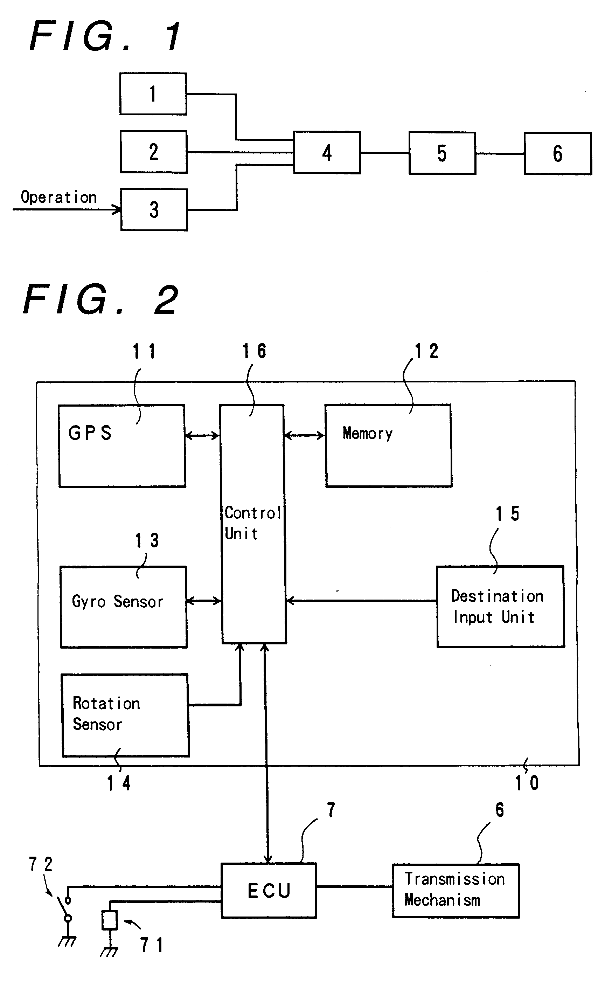

A control system for an automatic transmission according to a first embodiment is constructed, as shown in Figs. 1 and 2, to comprise: location detecting means for detecting the present location of a vehicle by a navigation system 10; vehicle status detecting means 2 for detecting a vehicle status; shift map determining means 3 for determining the shift map by the operation of the driver; storage means 4 for storing the location detected by the location detecting means 1, the shift map determined at the location by the shift map determining means 3, and the vehicle status detected at the location by the vehicle status detecting means 2; and shift map change means 5 for changing the shift map to that stored in the storage means 4, when the location detected by the location detecting means 1 and the vehicle status detected at the location by the vehicle status detecting means 2 are identical to those stored by the storage means 4, so that a transmission mechanism 6 of the transmission is controlled by the shift map changed.

The aforementioned navigation system 10 is constructed, as shown in Fig. 2, to include: a GPS receiver 11; a navigation memory 12 stored with map information and other necessary information; a gyro sensor 13; a rotation sensor 14 for detecting the covered distance and the vehicle speed; a destination input unit 15 for inputting the destination; and a control unit 16 for controlling the entire navigation.

This control unit 16 searches the route from the present location of the vehicle to the destination on the basis of the information stored in the navigation memory.

The aforementioned GPS receiver 11 detects the latitude, longitude and altitude of the present location of the vehicle according to the three-dimensional location method on the principle of the trigonometrical surface by using the data of the time and the orbital location which are transmitted from four or more GPS (i.e., Grobal Positioning System for determining the present location, true height and others on the basis of signals coming from the satellites) satellites.

The aforementioned navigation memory 12 is a CD-ROM which is stored in advance with the map information, the road information, the intersection information and other necessary information.

The aforementioned gyro sensor 13 is arranged at a suitable position in the vehicle and constructed to output an angular velocity signal dictating the turn of the vehicle.

The aforementioned rotation sensor 14 is constructed to detect the rotation of the drive line of the vehicle thereby to detect the covered distance and the vehicle speed.

The aforementioned navigation control unit 16 is connected with the GPS receiver 11 and the navigation memory 12 to control the entire navigation and to calculate and output the latitude, the longitude and the altitude of the present location of the vehicle on the basis of the location information and the altitude information coming from the GPS, the angular velocity signal coming from the gyro sensor 13, and the covered distance signal coming from the rotation sensor.

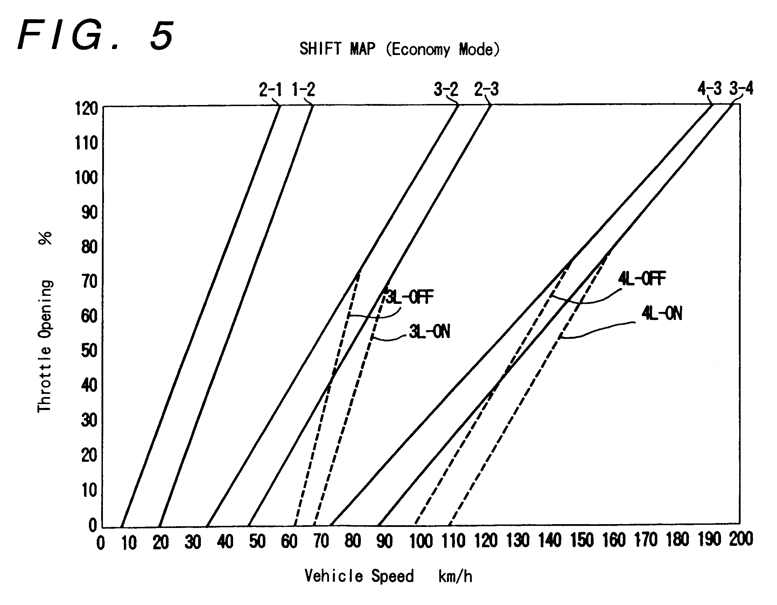

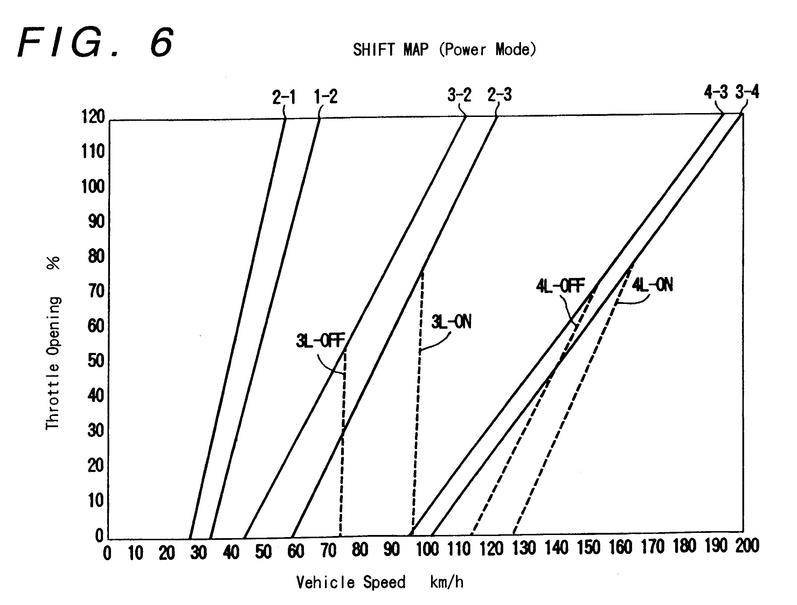

With an ECU 7 connected with the navigation control unit 16, there are connected an accelerator sensor 71 for detecting an accelerator depression angle and a brake switch 72 for detecting whether or not the brake is applied. The ECU 7 constructs: the vehicle status detecting means 2 for detecting the vehicle status; the shift map determining means 3 for determining the shift map in an economy mode and in a power mode, as shown in Figs. 5 and 6, by the operation of the driver; the storage means 4 for storing the location detected by the location detecting means 1, the shift map determined at the location by the shift map determining means 3, and the vehicle status detected at the location by the vehicle status detecting means 2; and the shift map change means 5 for changing the shift map to that stored in the storage means 4, when the location detected by the location detecting means 1 and the vehicle status detected at the location by the vehicle status detecting means 2 are identical to those stored by the storage means 4. Thus, the ECU 7 can output the shift map to the transmission mechanism 6.

In order to decide whether or not the route from the location detected by the location detecting means to the destination is identical to the route which has been learned, the storage means stores the route searched by the navigation system, together with the vehicle status and the shift map.

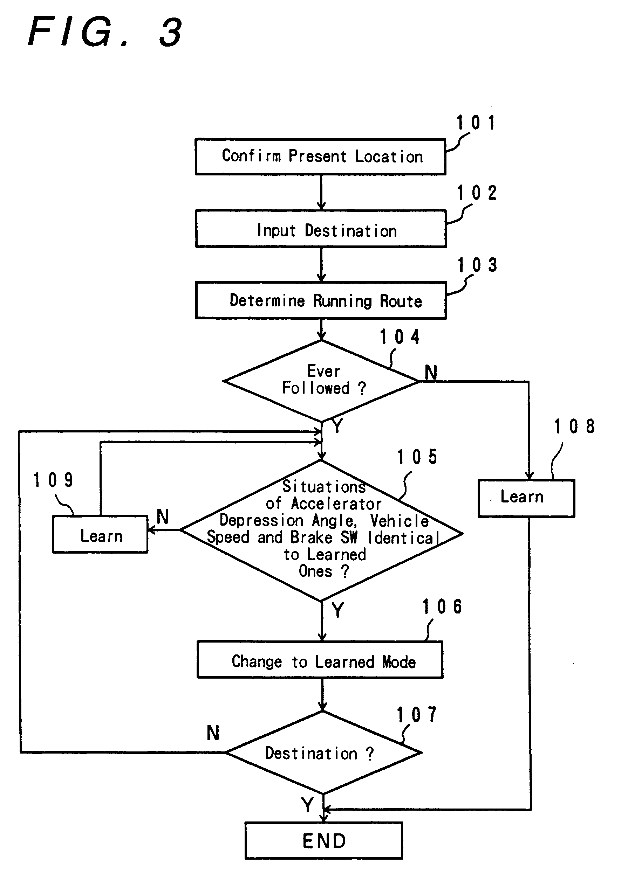

The operations of the control system for an automatic transmission thus constructed according to the first embodiment will be described with reference to the flow chart shown in Fig. 3.

At Step 101, in the aforementioned navigation system, the present location and the altitude of the vehicle are calculated and confirmed on the basis of the location information and the true height information coming from the GPS, the angular velocity signal coming from the gyro sensor 13, and the covered distance signal coming from the rotation sensor.

At Step 102, in the navigation system, the destination is inputted by the destination input unit 15. At Step 103, the running route is searched and determined on the basis of the inputted destination.

At Step 104, it is checked whether or not the running route, as searched and determined, to the destination has ever been followed. If the running route is followed, it is checked at Step 105 whether or not the situations of the accelerator depression angle detected by the accelerator sensor 71, the covered distance and vehicle speed detected by the rotation sensor 14, and the application/release of the brake, as detected by the brake switch 72, are identical to those which have been learned and stored.

At Step 106, if the situations of the accelerator depression angle, the vehicle speed and the application/release of the brake are identical to those, as learned and stored, the shift mode is changed to the learned and stored one to effect the shift control.

The shift control is executed in the learned and stored shift mode, as changed, till it is decided at Step 107 that the destination is reached.

If it is decided at Step 104 that the running route, as searched and determined, to the destination has not been followed yet, the accelerator depression angle, the vehicle speed, the application/release of the brake, the shift mode and the shift map are learned and stored at Step 108.

If it is decided at Step 105 that the situations of the accelerator depression angle, the vehicle speed and the application/release of the brake are not identical the learned and stored ones, the vehicle speed, the application/release of the brake, the shift mode and the shift map are learned and stored at Step 109.

The shift mode is changed to the learned and stored one so that the transmission mechanism 6 controls the shift of the automatic transmission in accordance with the changed shift map.

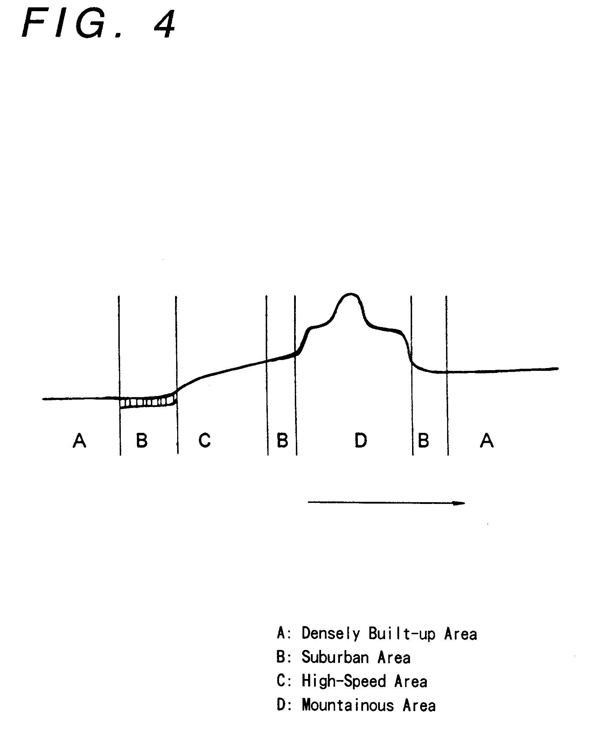

The operations of the present first embodiment will be described in more detail with reference to Fig. 4 and Tables 1 and 2.

Specifically, the vehicle speed, the latitude, the longitude and the shift mode at the first run of the running course of the pattern, in which are consecutively following a densely built-up area A, a suburban area B, a high-speed area C, a suburban area B, a mountainous area D, a suburban area B and a densely built-up area A, as shown in Fig. 4, are rearranged and enumerated in Table 1.

The vehicle speed, the latitude, the longitude and the shift mode at the second run of the running course are rearranged and enumerated in Table 2. Because of the traffic jam, the area B at the second run allowed the run at 30 Km/hour at the highest, as indicated by broken line in Fig. 4, so that the shift mode and the shift map, as learned and stored at the first run of the area B, could not be employed.

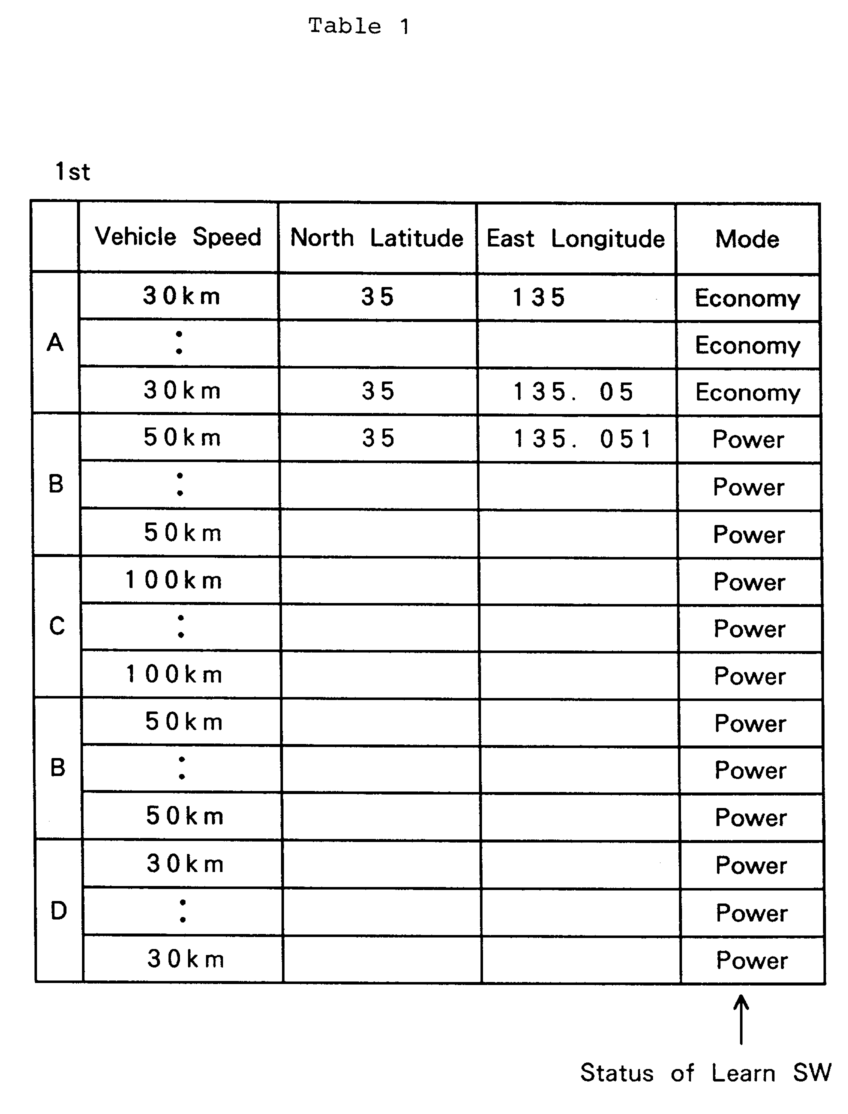

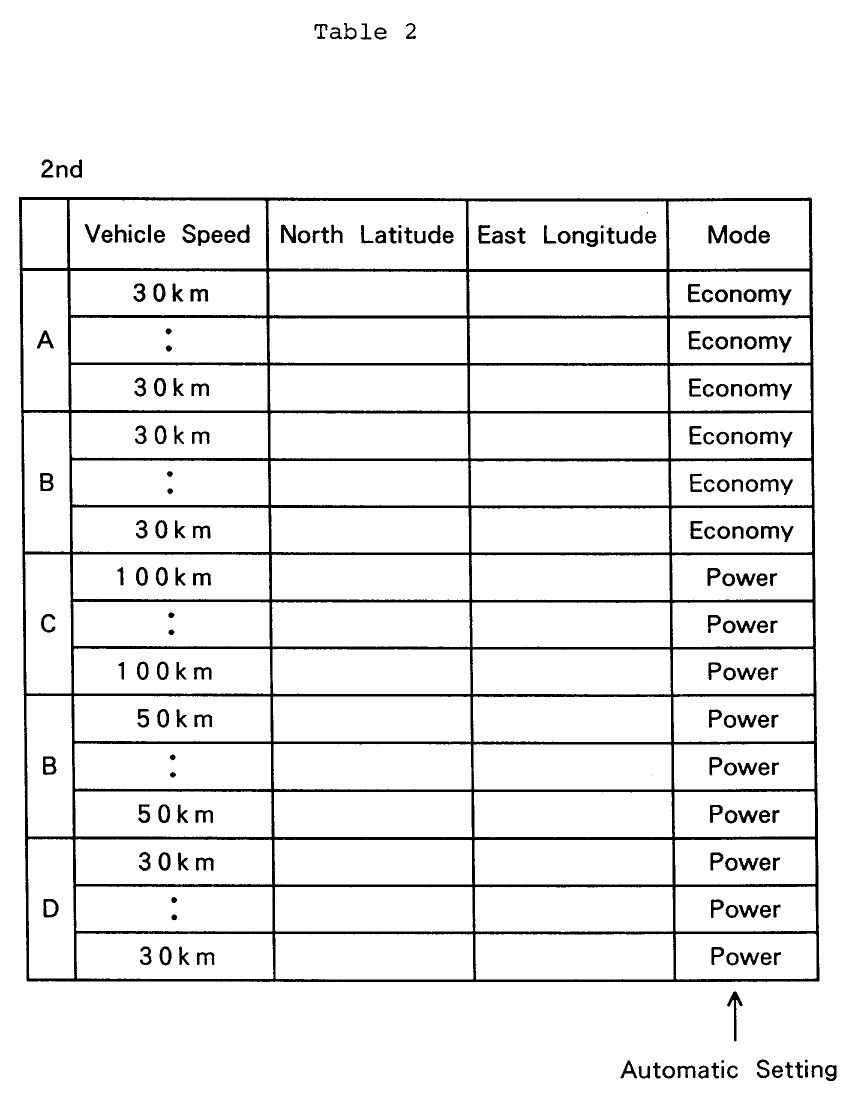

At the second and subsequent runs in the present first embodiment, the condition for setting the shift mode automatically is to decide that the shift mode is identical if the vehicle speed is no less than -10 Km/hour than that of the first run and continues for no less than ten seconds.

On the other hand, the items to be learned in the present first embodiment are the latitude, longitude and vehicle speed when the shift power mode is ON and the latitude, longitude and vehicle speed when the shift power mode is OFF.

Of the conditions for releasing the aforementioned learning items, the condition for releasing the power mode is satisfied if the vehicle speed is no less than - 10 Km/hour than the learned one and continues for no less than ten seconds and if the switch for the economy mode is depressed by the driver, and the condition for releasing the economy mode is satisfied if the switch for the power mode is depressed by the driver.

In the control system for an automatic transmission according to the first embodiment for achieving the aforementioned operations, the shift map changing means 5 changes the shift map to that as learned and stored in the storage means 4, when the location detected by the location detecting means 1 and the vehicle status detected at the location by the vehicle status detecting means 2 are identical to the location and the vehicle status which are stored by the storage means 4. As a result, there can be attained the effect that the running characteristics demanded by the driver can be automatically achieved without any vehicular operation of the driver.

In the control system for an automatic transmission according to the first embodiment, the location of the vehicle is detected simply and accurately by the sensor or the like of the navigation system 10, to provide the effect that the control can be made in the shift mode according to the location of the vehicle.

In the control system for an automatic transmission according to the first embodiment, moreover, the storage means is stored with the route from the present location of the vehicle to the destination together with the vehicle status and the shift map, to provide the effect that the control can be made in the shift mode according to the route, as searched by the navigation system, from the present location to the destination.

In the control system for an automatic transmission according to the first embodiment, moreover, it is decided whether or not the searched route to the destination is identical to that which has been learned and stored together with the shift map and the vehicle status in the storage means. If identical, the shift is controlled on the basis of the shift map which is stored together with the route learned and stored in the storage means. As a result, the effect attained is that the control can be made in the shift mode according to the location of the vehicle.

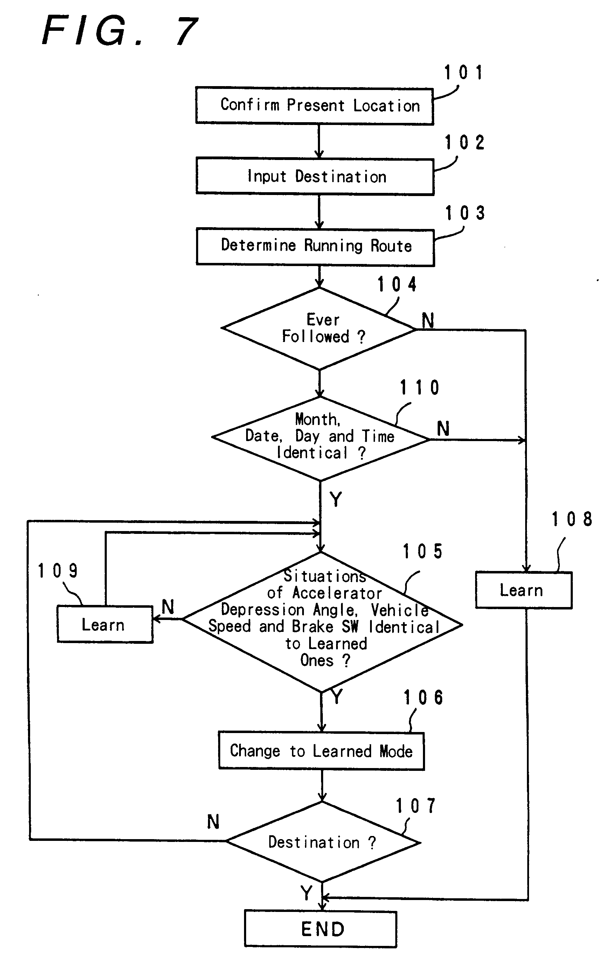

In the control system for an automatic transmission according to a second embodiment, as shown in Fig. 7, there is added between Step 104 and Step 105 of the first embodiment Step 110 at which it is decided, by outputting and storing the time environment including the month, the date, the day and the time in advance in the storage means 4, whether or not the location detected by the location detecting means 4 and the time environment detected by time environment means 8 are within the allowable error range (e.g., ten minutes) of the time environment stored at the location in the storage means.

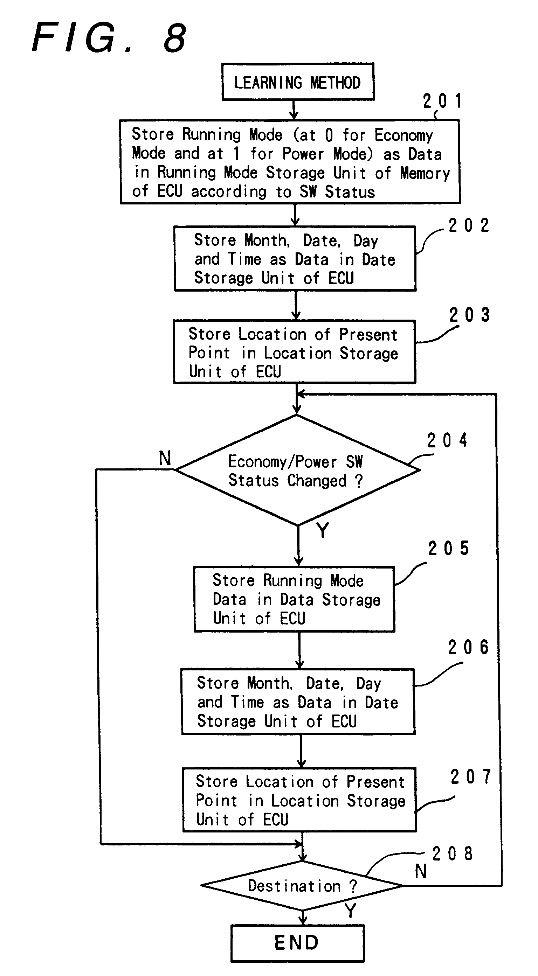

The learning method of the present second embodiment will be described with reference to Fig. 8.

At Step 201, the running mode, as set by the driver, is stored at 0 for the economy mode and at 1 for the power mode as the data in the running mode storage unit of the memory in the ECU 7.

At Step 202, the data of the month, the date, the day and the time in the data storage unit of the ECU 7. At Step 2-3, the present location of the vehicle is stored in the location storage unit of the ECU 7.

At Step 204, it is checked whether or not the switch status in the economy mode and the power mode of the running mode has changed. If the switch status has changed, the economy mode and the power mode of the running mode are stored in the data storage unit of the ECU 7.

At Step 206, the data of the month, date, day and time are stored in the data storage unit of the ECU 7. At Step 207, the present location of the vehicle is stored in the location storage unit of the ECU 7.

These operations are repeated till it is decided at Step 208 that the destination has been reached. If it is decided at Step 204 that the switch status in the economy mode and in the power mode of the running mode does not change, the routine advances to Step 208.

In the control system for an automatic transmission thus constructed according to the second embodiment, the shift map changing means 5 changes the shift map to that stored in the storage means 4, when the location detected by the location detecting means 1 and the time environment including the month, the date, the day and the time detected by the time environment means 8 are within the allowable error range of the time environment stored at the location in the storage means 4.

In the control system for an automatic transmission according to the second embodiment, the shift map is changed to that stored in the storage means 4, when the location detected by the location detecting means 1 and the time environment including the month, the date, the day and the time detected by the time environment means 8 are within the allowable error range of the time environment stored at the location in the storage means 4. As a result, there is attained the effect that the control can be made in the shift mode according to the traffic situation depending upon the time environment including the rush hours, the week days and the weekends.

The foregoing embodiments have been presented for purpose of description but should not be limited thereto and can be modified and added so long as it is not contrary to the technical concept of the present invention, as could be recognized by those skilled in the art from the scope of the claim, the detailed description of the invention and the accompanying drawings.

The foregoing embodiment has been described on the case in which it is decided that the vehicle status is identical, for example, if the vehicle speed is no less than -10 Km/hour than the learned one and continues for no less than ten seconds, so that the power mode is released. Despite of this description, however, the present invention should not be limited thereto but can be modified to modify the vehicle speed and the time, if necessary, depending upon the characteristics of the running path and the setting of the driver.

On the other hand, the foregoing second embodiment has been described on the case in which the allowable error range of the time environment is exemplified by ten minutes. Despite of this description, however, the present invention should not be limited thereto but can modify the allowable error range of the time environment, if necessary, depending upon the rush hours on the running path, the characteristics of the traffic circumstances such as the traffic volume, the setting of the driver and so on.

In summary, in the control system for an automatic transmission according to the first mode of invention for achieving the aforementioned operations, the shift map changing means changes the shift map to that stored in the storage means, when the location detected by the location detecting means and the vehicle status detected at the location by the vehicle status detecting means are identical to the location and the vehicle status which are stored by the storage means. As a result, there can be attained an effect that the running characteristics demanded by the driver can be automatically achieved without any vehicular operation of the driver.

In the control system for an automatic transmission according to the second mode of invention for achieving the aforementioned operations, in addition to the effects of the first mode of invention, the location of the vehicle is detected simply and accurately on the basis of the location detecting means which is included in the navigation system for guiding the route from the present location of the vehicle to the destination. As a result, there is attained an effect that the control can be made in the shift mode according to the location of the vehicle.

In the control system for an automatic transmission according to the third mode of invention for achieving the aforementioned operations, in addition to the effects of the second mode of invention, the storage means is stored with not only the route, as followed, from the present location of the vehicle to the destination but also the vehicle status and the shift map. As a result, there is attained an effect that the control can be made in the shift mode according to the route, as searched by the navigation system, from the present location to the destination.

In the control system for an automatic transmission according to the fourth mode of invention for achieving the aforementioned operations, in addition to the effects of the third mode of invention, it is decided whether or not the searched route to the destination is identical to that which has been learned and stored together with the shift map and the vehicle status in the storage means. If identical, the shift is controlled on the basis of the shift map which is stored together with the route learned and stored in the storage means. As a result, there is attained an effect that the control can be made in the shift mode according to the location of the vehicle on the searched route.

In the control system for an automatic transmission according to the fifth mode of invention for achieving the aforementioned operations, the shift map changing means changes the shift map to that on the route stored in the storage means, when the vehicle statuses at a plurality of consecutive points on the searched route are identical. As a result, there is attained an effect that the control can be made in a more reliable shift mode according to the location of the vehicle on the searched route.

In the control system for an automatic transmission according to the sixth mode of invention for achieving the aforementioned operations, the shift map changing means changes the shift map to that stored in the storage means, when the location detected by the location detecting means and the time environment including the month, the date, the day and the time detected by the time environment means are within the allowable error range of the time environment stored at the location in the storage means. As a result, there is attained an effect that the control can be made in the shift mode according to the traffic situation depending upon the time environment including the rush hours, the week days and the weekends.

## Claims

1. A control system for an automatic transmission, comprising:
location detecting means for detecting the present location of a vehicle;
shift map determining means for determining a shift map by the operation of a driver;
vehicle status detecting means for detecting the status of the vehicle;
storage means for storing the location detected by said location detecting means, the shift map determined at said location by said shift map determining means, and the vehicle status detected at said location by said vehicle status detecting means; and
shift map changing means for changing the shift map to that stored in said storage means, when the location detected by said location detecting means and the vehicle status detected at said location by said vehicle status detecting means are identical to the location and the vehicle status which are stored by said storage means.

2. A control system for an automatic transmission according to claim 1, further comprising a navigation system including said location detecting means for guiding the route from the present location of the vehicle to a destination.

3. A control system for an automatic transmission according to claim 2,
wherein said storage means is stored with the followed route, as searched by said navigation system, from a starting point to the destination.

4. A control system for an automatic transmission according to claim 3,
wherein it is decided whether or not the searched route to the destination is identical to that which has been learned and stored together with the shift map and the vehicle status in said storage means.

5. A control system for an automatic transmission according to claim 4,
wherein said shift map changing means changes the shift map to that on the route stored in said storage means, when the vehicle statuses at a plurality of consecutive points on said searched route are identical.

6. A control system for an automatic transmission according to claim 4 or 5, further comprising time environment detecting means for detecting a time environment including the month, the date, the day and the time and outputting it to said storage means,
wherein said shift map changing means changes the shift map to that stored in said storage means, when the location detected by said location detecting means and the time environment detected by said time environment means are within the allowable error range of the time environment stored at said location in said storage means.
